# EUROPEAN PATENT SPECIFICATION

(11) **EP 4 450 395 B1**
(45) Date of publication and mention of the grant of the patent: **04.03.2026**
(21) Application number: 24169945.3
(22) Date of filing: 12.04.2024
(51) Int. Cl.: B64D 27/33, B64D 41/00

(54) **ELECTRIC HYBRID EMERGENCY POWER UNIT**
ELEKTRISCHE HYBRIDE NOTSTROMVERSORGUNG
UNITÉ D'ALIMENTATION ÉLECTRIQUE DE SECOURS HYBRIDE

(30) Priority: 20.04.2023 US 202363497238 P; 13.10.2023 US 202318486798
(43) Date of publication of application: 23.10.2024
(73) Proprietor: Honeywell International Inc., Charlotte, NC 28202 (US)
(72) Inventor: TANG, Benjamin, Charlotte, 28202 (US)
(74) Representative: Ingrassia, Fisher & Lorenz UK Ltd.

(56) References cited:
- EP-A1- 4 011 780
- EP-B1- 1 619 370
- WO-A1-2022/178452
- US-A1- 2012 221 157

## Description

### CROSS REFERENCE TO RELATED APPLICATION

This application claims the benefit of and priority to U.S. Provisional Application No. 63/497,238, filed on April 20, 2023.

### BACKGROUND

Aircraft emergency power systems provide electrical power and/or hydraulic power in case of aircraft system failures. Such system failures can include failures of electrical generators, hydraulic pumps, main engines, and auxiliary power units (APUs). One example of an emergency power system is a so-called ram air turbine (RAT). In the RAT, the turbine is typically designed for a minimum air speed (such as sea level stall speed) and is sized to provide rated hydraulic and electrical power. A complex control system is needed to keep the RAT from overspeed during higher aircraft speed because of excessive power resulting from the large turbine and high aircraft speed. The large turbine imposes additional drag penalty when the aircraft is gliding in an emergency. The net result is that a typical RAT has a relatively large turbine, incurring weight, size (deployment door) constraint, and drag penalty.

EP 4 011 780 A1 discloses an emergency power unit for an aircraft comprising an inverter that is activated to receive direct current (DC) power from a battery and to supply electrical power to the aircraft electrical system in response to the occurrence of a fault mode of the generator.

In some military aircraft, an emergency power unit (EPU) uses a toxic chemical propellant (e.g., hydrazine) to provide enough power for a pilot to safely land the aircraft after a loss of electrical power from the main systems. The toxic chemical propellant provides a significant cost and personnel risk to the military.

Accordingly, there is a need for an emergency power system with reduced size, weight, and drag during gliding, and that eliminates the need to use a toxic chemical propellant, with less bleed air from the aircraft engine.

### SUMMARY

A hybrid emergency power unit for an aircraft comprises a controller, a generator-motor operatively coupled to the controller, a single hydraulic pump operatively coupled to the generator-motor, a battery pack operatively coupled to the controller, and a turbine operatively coupled to the generator-motor. During a bleed air mode, the turbine and the generator-motor are configured to supply electricity to the controller, which is configured to rectify an output of the generator-motor for consumption by one or more electrical systems on the aircraft. During an augment mode, when bleed air provides insufficient power, the controller is configured to draw at least some power from the battery pack and convert the output of the generator-motor for consumption by the one or more electrical systems on the aircraft. During an emergency mode, the controller is configured to draw electricity from the battery pack and provide power to drive the generator-motor, which in turn drives the hydraulic pump and provides electrical power to aircraft systems.

### BRIEF DESCRIPTION OF THE DRAWINGS

Features of the present invention will become apparent to those skilled in the art from the following description with reference to the drawings. Understanding that the drawings depict only typical embodiments and are not therefore to be considered limiting in scope, insofar as they fall within the scope of the appended claims, the invention will be described with additional specificity and detail through the use of the accompanying drawings, in which:
Figure 1 is a block diagram of a hybrid emergency power unit for an aircraft, according to one embodiment;
Figure 2 is block diagram of a hybrid emergency power unit for an aircraft, according to another embodiment; and
Figure 3 is block diagram of a hybrid emergency power unit for an aircraft, according to a further embodiment.

### DETAILED DESCRIPTION

In the following detailed description, embodiments are described in sufficient detail to enable those skilled in the art to practice the invention. It is to be understood that other embodiments may be utilized without departing from the scope of the invention, defined by the appended claims. The following detailed description is, therefore, not to be taken in a limiting sense.

Embodiments of an electric hybrid emergency power unit (HEPU) for aircraft are described herein. These HEPU embodiments differ from existing emergency power units various aspects. In one aspect, the HEPU embodiments do not use a conventional electrical generator, but rather, use an integrated generator-motor. With a battery providing power to the motor, the motor in turn drives a hydraulic pump during the short time at low aircraft speed. This enables the turbine of a HEPU to be much smaller than a turbine in a conventional emergency power unit such as a RAT. In addition, excess turbine power can be used to recharge the battery, if needed. Further, by using the present HEPU embodiments, hydrazine and hydrazine handling equipment are eliminated from aircraft.

Further details of various embodiments are described hereafter and with reference to the drawings.

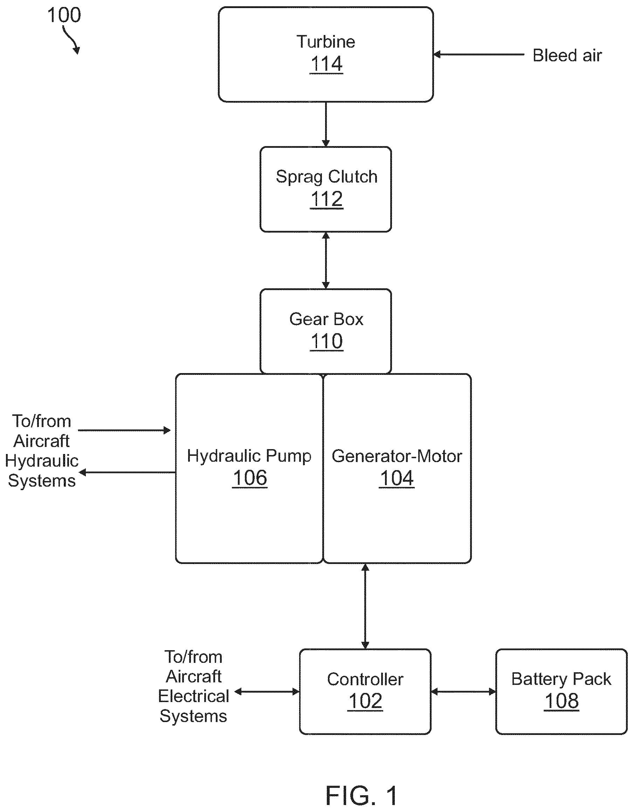

Figure 1 is a block diagram of one embodiment of a hybrid emergency power unit (HEPU) 100 for an aircraft, according to the present approach. The HEPU 100 generally includes a controller 102 operatively coupled with a generator-motor 104, such as a permanent magnet generator-motor. In some embodiments, generator-motor 104 operates at the same speed as the turbine in prior emergency power units (EPUs), e.g., 75,000 rpm. Operating generator-motor 104 at high-speed results in significant weight reduction compared to a conventional generator operating at a baseline speed of 12,000 rpm. This helps reduce the weight of the HEPU compared to prior EPUs.

In addition, HEPU 100 includes a hydraulic pump 106 operatively coupled to generator-motor 104, and a battery pack 108 operatively coupled to controller 102. A gearbox 110 is operatively coupled to generator-motor 104 and hydraulic pump 106. A turbine 114 and generator-motor 104 are configured to supply electricity to controller 102.

In one embodiment, a sprag clutch 112 can be coupled between gearbox 110 and turbine 114. The sprag clutch 112 can be integrated into the design of gearbox 110 to prevent back driving turbine 114 and wasting energy stored in battery pack 108 on turbine windage loss. In addition, in one embodiment, controller 102 and generator-motor 104 can be cooled by hydraulic fluid.

During operation of HEPU 100 in a bleed air mode (BAM), turbine 114 and generator-motor 104 are configured to supply electricity to controller 102. In bleed air mode, the turbine is powered by bleed air from the aircraft engine. Bleed air mode is used when there is a failure or interruption of the aircraft main electrical generator or main hydraulic pump. The controller 102 is configured to rectify the output of generator-motor 104, such as at 400 hertz (Hz) 115 volts alternating current (VAC) or other electrical formats, for consumption by one or more electrical systems onboard the aircraft, such as flight controls and flight critical instruments. In addition, recharging of battery pack 108 can be performed during part of BAM when there is excess power.

During operation of HEPU 100 in an augment mode, when the bleed air is insufficient to provide the required power, controller 102 is configured to start drawing at least some power from battery pack 108 and to convert the output of generator-motor 104, such as at 400 Hz 115 VAC, for consumption by one or more electrical systems onboard the aircraft. The controller 102 is also configured to supply power to generator-motor 104 to aid in driving hydraulic pump 106 in the augment mode.

During operation of HEPU 100 in an emergency mode, which is the monopropellant mode in prior systems, controller 102 is configured to draw electricity from battery pack 108 and provide power to drive generator-motor 104, which in turn drives hydraulic pump 106 thru gearbox 110. The hydraulic pump 106 is configured to provide hydraulic power to the aircraft hydraulic systems to provide the ability to control the aircraft during the emergency. The controller 102 also provides electrical power to the aircraft using power draw from battery pack 108.

The electrical output format will depend on the aircraft platform. The battery energy can replace chemical propellant, which have high handling costs. The battery power can augment bleed air to satisfy short high-power demand from the aircraft. This augmentation results in a smaller turbine with less throttling loss at low power demand.

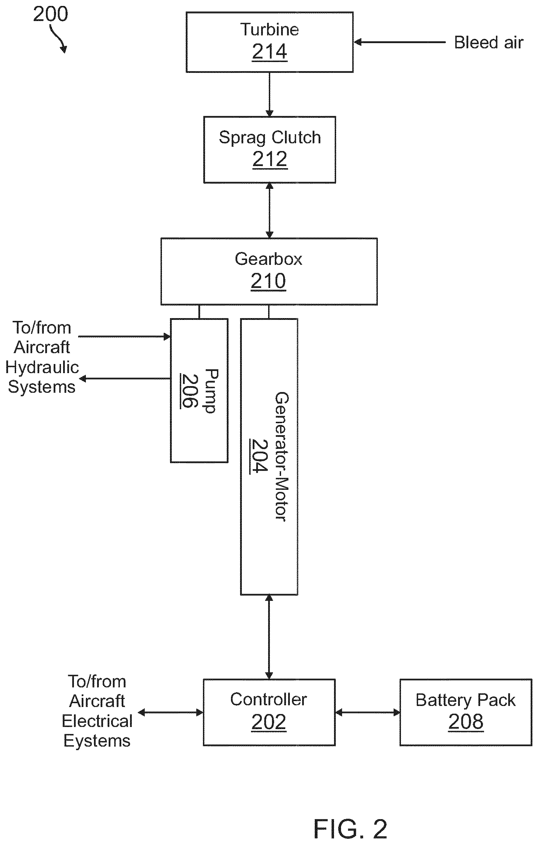

Figure 2 is a block diagram of a HEPU 200 for an aircraft, according to another embodiment. The HEPU 200 generally includes a controller 202 operatively coupled with a generator-motor 204, such as a permanent magnet generator-motor. In addition, HEPU 200 includes a hydraulic pump 206 operatively coupled to generator-motor 204, and a battery pack 208 operatively coupled to controller 202. A gearbox 210 is operatively coupled to generator-motor 204 and hydraulic pump 206. A turbine 214 is operatively coupled to generator-motor 204 through gearbox 210. In HEPU 200, generator-motor 204 is configured to be in line with turbine 214, such that generator-motor 204 operates at substantially the same speed as turbine 214.

In one embodiment, a sprag clutch 212 can be coupled between gearbox 210 and turbine 214. The sprag clutch 212 can be integrated into the design of gearbox 210 to prevent back driving turbine 214 and wasting energy stored in battery pack 208 on turbine windage loss.

During operation of HEPU 200 in a bleed air mode (BAM), pneumatic energy in the form of bleed air is fed to turbine 214, and mechanical energy is supplied from turbine 214 to sprag clutch 212 (when present), which in turn supplies the mechanical energy to gearbox 210. The gearbox 210 sends the mechanical energy to generator-motor 204, which converts the mechanical energy to electrical energy that is transmitted to controller 202. The controller 202 rectifies the electrical energy from generator-motor 204, such as at 400 Hz 115 VAC or other electrical formats, for consumption by various aircraft electrical systems. In addition, battery pack 208 can be recharged with electrical energy from controller 202 when there is excess power.

During operation of HEPU 200 in an augment mode, when the bleed air provides insufficient power, controller 202 starts to draw electrical energy from battery pack 208 and converts the electrical energy from generator-motor 204, such as at 400 Hz 115 VAC, for aircraft consumption. The controller 202 can also supply power to generator-motor 204 to help drive hydraulic pump 206, which provides hydraulic flow to and from various aircraft hydraulic systems.

During operation of HEPU 200 in an emergency mode, controller 202 draws electrical energy from battery pack 208 and provides power to drive generator-motor 204, which in turn drives gearbox 210 and hydraulic pump 206. The hydraulic pump 206 provides hydraulic flow to the aircraft hydraulic systems to provide the ability to control the aircraft during the emergency. The controller 202 also provides electrical power to the aircraft using power draw from battery pack 208.

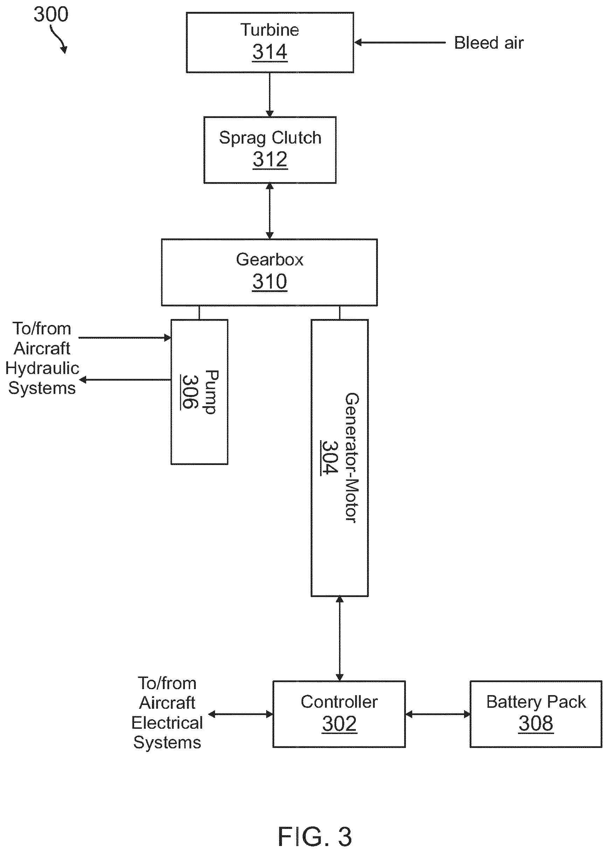

Figure 3 is a block diagram of a HEPU 300 for an aircraft, according to another embodiment. The HEPU 300 generally includes a controller 302 operatively coupled with a generator-motor 304, such as a permanent magnet generator-motor. In addition, HEPU 300 includes a hydraulic pump 306 operatively coupled to generator-motor 304, and a battery pack 308 operatively coupled to controller 302. A gearbox 310 is operatively coupled to generator-motor 304 and hydraulic pump 306. A turbine 314 is operatively connected to generator-motor 304 via gearing in gearbox 310. This allows generator-motor 304 to operate at a higher speed or a lower speed than turbine 314 to optimize performance and weight of turbine 314 and generator-motor 304.

In one embodiment, a sprag clutch 312 can be coupled between gearbox 310 and turbine 314. The sprag clutch 312 can be integrated into the design of gearbox 310 to prevent back driving turbine 314 and wasting energy stored in battery pack 308 on turbine windage loss.

During operation of HEPU 300 in a bleed air mode, pneumatic energy in the form of bleed air is fed to turbine 314, and mechanical energy is supplied from turbine 314 to sprag clutch 312 (when present), which in turn supplies the mechanical energy to gearbox 310. The gearbox 310 sends the mechanical energy via gearing to generator-motor 304, which converts the mechanical energy to electrical energy that is transmitted to controller 302. The controller 302 rectifies the electrical energy from generator-motor 304, such as at 400 Hz 115 VAC or other electrical formats, for consumption by various aircraft electrical systems. In addition, battery pack 308 can be recharged with electrical energy from controller 302 when there is excess power.

During operation of HEPU 300 in an augment mode, when the bleed air is insufficient to provide the required power, controller 302 starts to draw electrical energy from battery pack 308 and converts the electrical energy from generator-motor 304, such as at 400 Hz 115 VAC, for aircraft consumption. The controller 302 can also supply power to generator-motor 304 to help drive hydraulic pump 306, which provides hydraulic flow to and from various aircraft hydraulic systems.

During operation of HEPU 300 in an emergency mode, controller 302 draws electrical energy from battery pack 308 and provides power to drive generator-motor 304, which in turn drives gearbox 310 and hydraulic pump 306. The hydraulic pump 306 provides hydraulic flow to the aircraft hydraulic systems to provide the ability to control the aircraft during the emergency. The controller 302 also provides electrical power to the aircraft using power draw from battery pack 308.

The present invention may be embodied in other specific forms without departing from the scope of the appended claims. The described embodiments are to be considered in all respects only as illustrative and not restrictive. The scope of the invention is therefore indicated by the appended claims rather than by the foregoing description.

## Claims

1. A hybrid emergency power unit (100, 200, 300) for an aircraft, comprising:
a controller (102, 202, 302);
a generator-motor (104, 204, 304) operatively coupled to the controller;
a single hydraulic pump (106, 206, 306) operatively coupled to the generator-motor;
a battery pack (108, 208, 308) operatively coupled to the controller; and
a turbine (114, 214, 314) operatively coupled to the generator-motor;
wherein during a bleed air mode, the turbine and the generator-motor are configured to supply electricity to the controller, which is configured to rectify an output of the generator-motor for consumption by one or more electrical systems on the aircraft;
wherein during an augment mode, when bleed air provides insufficient power, the controller is configured to draw at least some power from the battery pack and convert the output of the generator-motor for consumption by the one or more electrical systems on the aircraft;
wherein during an emergency mode, the controller is configured to draw electricity from the battery pack and provide power to drive the generator-motor, which in turn drives the hydraulic pump and provides electrical power to aircraft systems.

2. The hybrid emergency power unit of claim 1, wherein the generator-motor is configured to be in line with the turbine, such that the generator-motor operates at substantially a same speed as the turbine.

3. The hybrid emergency power unit of claim 1, further comprising a gearbox (110, 210, 310) operatively coupled to the generator-motor and the hydraulic pump.

4. The hybrid emergency power unit of claim 3, wherein the turbine is operatively coupled to the generator-motor via gearing in the gearbox, allowing the generator-motor to operate at a higher speed or a lower speed than the turbine.

5. The hybrid emergency power unit of claim 3, further comprising a sprag clutch (112, 212, 312) coupled between the gearbox and the turbine.

6. The hybrid emergency power unit of claim 1, wherein during the bleed air mode, the controller is configured to rectify the output of the generator-motor at 400 hertz, Hz, and 115 volts alternating current, VAC.

7. The hybrid emergency power unit of claim 1, wherein during the bleed air mode, the controller is configured to recharge the battery pack when there is excess power from the generator-motor.

8. The hybrid emergency power unit of claim 1, wherein during the augment mode, the controller is configured to convert electrical energy from the generator-motor at 400 Hz 115 VAC.

9. The hybrid emergency power unit of claim 1, wherein during the augment mode, the controller is configured to supply power to the generator-motor to aid in driving the hydraulic pump, which is configured to provide hydraulic flow to one or more hydraulic systems onboard the aircraft.

10. The hybrid emergency power unit of claim 1, wherein during the emergency mode, the hydraulic pump is configured to provide hydraulic flow to one or more hydraulic systems onboard the aircraft.

## Patentansprüche

1. Hybrides Notleistungsaggregat (100, 200, 300) für ein Flugzeug, umfassend:
eine Steuerung (102, 202, 302);
einen Generatormotor (104, 204, 304), der betriebsfähig mit der Steuerung gekoppelt ist;
eine einzelne Hydraulikpumpe (106, 206, 306), die betriebsfähig mit dem Generatormotor gekoppelt ist;
einen Akku (108, 208, 308), der betriebsfähig mit der Steuerung gekoppelt ist; und
eine Turbine (114, 214, 314), die betriebsfähig mit dem Generatormotor gekoppelt ist;
wobei während eines Zapfluftmodus die Turbine und der Generatormotor dazu konfiguriert sind, Elektrizität an die Steuerung zu liefern, die dazu konfiguriert ist, eine Ausgabe des Generatormotors zum Verbrauch durch ein oder mehrere elektrische Systeme in dem Flugzeug gleichzurichten;
wobei während eines Steigerungsmodus, wenn Zapfluft unzureichend Leistung bereitstellt, die Steuerung dazu konfiguriert ist, mindestens etwas Leistung aus dem Akku zu ziehen und die Ausgabe des Generatormotors zum Verbrauch durch das eine oder die mehreren elektrischen Systeme in dem Flugzeug umzuwandeln;
wobei während eines Notmodus, die Steuerung dazu konfiguriert ist, Elektrizität aus dem Akku zu ziehen und Leistung bereitzustellen, um den Generatormotor anzutreiben, der wiederum die Hydraulikpumpe antreibt und elektrische Leistung an die Flugzeugsysteme bereitstellt.

2. Hybrides Notleistungsaggregat nach Anspruch 1, wobei der Generatormotor dazu konfiguriert ist, mit der Turbine im Einklang zu sein, sodass der Generatormotor im Wesentlichen mit einer gleichen Geschwindigkeit wie die Turbine betrieben wird.

3. Hybrides Notleistungsaggregat nach Anspruch 1, ferner umfassend ein Getriebegehäuse (110, 210, 310), das betriebsfähig mit dem Generatormotor und der Hydraulikpumpe gekoppelt ist.

4. Hybrides Notleistungsaggregat nach Anspruch 3, wobei die Turbine über ein Getriebe in dem Getriebegehäuse betriebsfähig mit dem Generatormotor gekoppelt ist, was es dem Generatormotor ermöglicht, in einer höheren Geschwindigkeit oder einer niedrigeren Geschwindigkeit als die Turbine betrieben zu werden.

5. Hybrides Notleistungsaggregat nach Anspruch 3, ferner umfassend eine Freilaufkupplung (112, 212, 312), die zwischen dem Getriebegehäuse und der Turbine gekoppelt ist.

6. Hybrides Notleistungsaggregat nach Anspruch 1, wobei während des Zapfluftmodus die Steuerung dazu konfiguriert ist, die Ausgabe des Generatormotors auf 400 Hertz, Hz, und 115 Volt Wechselstrom, VAC, gleichzurichten.

7. Hybrides Notleistungsaggregat nach Anspruch 1, wobei während des Zapfluftmodus die Steuerung dazu konfiguriert ist, den Akku aufzuladen, wenn überschüssige Leistung von dem Generatormotor vorhanden ist.

8. Hybrides Notleistungsaggregat nach Anspruch 1, wobei während des Steigerungsmodus, die Steuerung dazu konfiguriert ist, elektrische Energie von dem Generatormotor in 400 Hz, und 115 VAC, umzuwandeln.

9. Hybrides Notleistungsaggregat nach Anspruch 1, wobei während des Steigerungsmodus die Steuerung dazu konfiguriert ist, Leistung an den Generatormotor zu liefern, um beim Antreiben der Hydraulikpumpe zu unterstützen, die dazu konfiguriert ist, einen Hydraulikfluss an ein oder mehrere Hydrauliksysteme an Bord des Flugzeugs bereitzustellen.

10. Hybrides Notleistungsaggregat nach Anspruch 1, wobei während des Notmodus die Hydraulikpumpe dazu konfiguriert ist, einen Hydraulikfluss an ein oder mehrere Hydrauliksysteme an Bord des Flugzeugs bereitzustellen.

## Revendications

1. Unité d'alimentation de secours hybride (100, 200, 300) pour un aéronef, comprenant :
un contrôleur (102, 202, 302) ;
un générateur-moteur (104, 204, 304) couplé fonctionnellement au contrôleur ;
une seule pompe hydraulique (106, 206, 306) couplée fonctionnellement au générateur-moteur ;
un bloc-batterie (108, 208, 308) couplé fonctionnellement au contrôleur ; et
une turbine (114, 214, 314) couplée fonctionnellement au générateur-moteur ;
dans laquelle en mode de prélèvement d'air, la turbine et le générateur-moteur sont configurés pour fournir de l'électricité au contrôleur, lequel est configuré pour redresser une sortie du générateur-moteur pour consommation par un ou plusieurs systèmes électriques sur l'aéronef ;
dans laquelle en mode d'augmentation, lorsque l'air de prélèvement fournit une puissance insuffisante, le contrôleur est configuré pour prélever au moins une certaine puissance dans le bloc-batterie et convertir la sortie du générateur-moteur pour consommation par les un ou plusieurs systèmes électriques sur l'aéronef ;
dans laquelle en mode de secours, le contrôleur est configuré pour prélever de l'électricité dans le bloc-batterie et fournir de la puissance pour entraîner le générateur-moteur, lequel à son tour entraîne la pompe hydraulique et fournit une puissance électrique aux systèmes de l'aéronef.

2. Unité d'alimentation de secours hybride selon la revendication 1, dans laquelle le générateur-moteur est configuré pour être aligné avec la turbine, de telle sorte que le générateur-moteur fonctionne sensiblement à une même vitesse que la turbine.

3. Unité d'alimentation de secours hybride selon la revendication 1, comprenant en outre une boîte de vitesses (110, 210, 310) couplée fonctionnellement au générateur-moteur et à la pompe hydraulique.

4. Unité d'alimentation de secours hybride selon la revendication 3, dans laquelle la turbine est couplée fonctionnellement au générateur-moteur via les engrenages dans la boîte de vitesses, ce qui permet au générateur-moteur de fonctionner à une vitesse plus élevée ou à une vitesse moins élevée que la turbine.

5. Unité d'alimentation de secours hybride selon la revendication 3, comprenant en outre un crabotage (112, 212, 312) couplé entre la boîte de vitesses et la turbine.

6. Unité d'alimentation de secours hybride selon la revendication 1, dans laquelle en mode de prélèvement d'air, le contrôleur est configuré pour redresser la sortie du générateur-moteur à 400 hertz, Hz, et 115 volts de courant alternatif, VAC.

7. Unité d'alimentation de secours hybride selon la revendication 1, dans laquelle en mode de prélèvement d'air, le contrôleur est configuré pour recharger le bloc-batterie en présence d'une puissance excessive en provenance du générateur-moteur.

8. Unité d'alimentation de secours hybride selon la revendication 1, dans laquelle en mode d'augmentation, le contrôleur est configuré pour convertir l'énergie électrique en provenance du générateur-moteur à 400 Hz et 115 VAC.

9. Unité d'alimentation de secours hybride selon la revendication 1, dans laquelle en mode d'augmentation, le contrôleur est configuré pour fournir de la puissance au générateur-moteur pour assister l'entraînement de la pompe hydraulique, laquelle est configurée pour fournir un flux hydraulique à un ou plusieurs systèmes hydrauliques à bord de l'aéronef.

10. Unité d'alimentation de secours hybride selon la revendication 1, dans laquelle en mode de secours, la pompe hydraulique est configurée pour fournir un flux hydraulique à un ou plusieurs systèmes hydrauliques à bord de l'aéronef.
